Europäisches Patentamt
European Patent Office
Office européen des brevets

(19)

(11) Publication number: **0 288 398 A2**

(12)

# EUROPEAN PATENT APPLICATION

(21) Application number: 88420126.0

(22) Date of filing: 20.04.88

(51) Int. Cl.[4]: C 08 L 67/02
C 08 L 71/02, C 08 L 33/02,
C 08 K 5/09, C 08 K 7/14,
C 08 K 5/10

(30) Priority: 23.04.87 US 41505

(43) Date of publication of application:
26.10.88 Bulletin 88/43

(84) Designated Contracting States: DE FR GB

(71) Applicant: **EASTMAN KODAK COMPANY**
**Patent Department 343 State Street**
**Rochester New York 14650 (US)**

(72) Inventor: **Light, Ronald Richard c/o EASTMAN KODAK COMPANY**
**Patent Department 343 State Street**
**Rochester New York 14650 (US)**

**McGill, Jennifer Ann Loflin EASTMAN KODAK COMPANY**
**Patent Department 343 State Street**
**Rochester New York 14650 (US)**

(74) Representative: **Parent, Yves et al**
**Kodak-Pathé Département Brevets et Licences Centre**
**de Recherches et de Technologie Zone Industrielle**
**F-71102 Chalon-sur-Saône Cédex (FR)**

(54) **Fiber-reinforced polyester of improved strength.**

(57) A reinforced polyester of improved strength comprising a multiple polyester having incorporated therein 0.1% to 10.0% by weight of a nucleating agent; 10% to 60% by weight of a reinforcing filler; and 0.5% to 5.0% by weight of a phenoxy resin having the formula

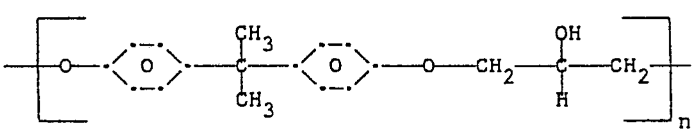

wherein n is 50 to 100. A preferred filler is glass fibers, but the polyester may contain mica or talcum as well. The composition may also contain other additives such as flame retardants, stabilizers, plasticizers, processing aids and colorants. Preferred nucleating agents are partially neutralized alkali metal salts of ionic ($C_2$-$C_5$) alpha-olefin/($C_3$-$C_5$) alpha-beta-ethylenically unsaturated carboxylic acid copolymers and mixtures thereof. The reinforced polyesters of the invention are used to manufacture articles by molding, preferably injection molding, useful in the automotive and electronic industry.

EP 0 288 398 A2

## Description

# FIBER-REINFORCED POLYESTER OF IMPROVED STRENGTH

Field of the Invention

This invention relates to reinforced polyester compositions containing defunctionalized phenoxy resins. These compositions exhibit unexpected high strength and are useful in the electronics and automotive industry where high strength properties in injection molded parts are required.

Description of the Background

Poly(alkylene terephthalates) such as poly(ethylene), poly(propylene), poly(butylene) and poly(cyclohexyldimethylene) terephthalates have long been known, and their reinforced products can be molded or otherwise processed.

The superior improved moldability and improved properties of the molded article obtained by reinforcing poly(alkylene terephthalate) resins such as poly(ethylene terephthalate) (PET) and poly(cyclohexylene terephthalate) (PCT) has long been established (see e.g., U.S. Patent No. 3,814,725).

It has long been known that specific nucleating agents and plasticizers when added to PET reinforced with glass fibers enhance the moldability of the composition in molds heated from 90°C to 150°C.

U.S. Patent Nos. 3,435,093, 3,368,995, 3,516,957, 4,351,757, 4,352,904 and 4,357,268 describe the use of nucleating agents such as a sodium or potassium salt of an ionic hydrocarbon copolymer of an alpha-olefin of 2-5 carbon atoms and an alpha-beta-ethylenically unsaturated caroboxylic acid of 3-5 carbon atoms in which the carboxyl groups have been partially neutralized. Other nucleating agents described in these patents are carbon powders, oxides, sulfates, phosphates, silicates, oxalates, stearates, benzoates, salicylates and tartrates of metals of Group II of the periodic table, salts of dimer or trimer acids and mixtures thereof.

The plasticizers mentioned in some of these patents are based on esters of organic acids and alcohols. Two examples mentioned are pentaerythritol tetrastearate and neopentyl glycol dibenzoate. The plasticizers are said to act synergistically with the nucleating agents and aid in both crystallization and mold release of the glass fiber-reinforced PET compositions.

Other additives of interest are disclosed in U.S. Patents Nos. 4,357,268, 4,385,144, 4,486,561, 4,539,352, and 4,551,485. These include additives such as polyepoxides also prepared from bisphenol A and epichlorohydrin, epoxidized plasticizers and organofunctional silane coupling agents.

The polyepoxides described in U.S. Patent No. 4,357,268 have the general formula of

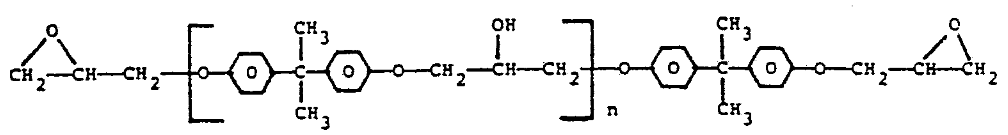

and have average molecular weights of 340 to 4,000.

In addition, U.S. Patent No. 3,962,174 describes an improved thermoplastic molding resin comprising reinforced poly(butylene terephthalate) or poly(propylene terephthalate) polymers in the presence of a thermoplastic phenoxy resin.

Also, U.S. patent No. 4,008,199 describes stabilized poly(alkylene terephthalate) resin compositions comprising poly(propylene terephthalate) or poly(butylene terephthalate), a reinforcing filler and a stabilizing amount of a mixture of a polyamide polymer, a phenoxy resin and an organic phosphonate.

However, there is still a need for higher strength glass fiber-reinforced polyesters for use in injection molding applications such as in the production of automotive and electronic parts. The present invention fills this need in providing high strength, reinforced polyesters achieved by using a combination of a particular nucleating agent with a phenoxy resin in certain polyesters.

Description of the Invention

This invention provides a reinforced polyester composition of improved strength comprising a moldable polyester having incorporated therein

0.1% to 10.0% by weight of a nucleating agent;

10% to 60% by weight of a reinforcing filler such as glass fibers; and

0.5% to 5.0% by weight of a phenoxy resin having the formula

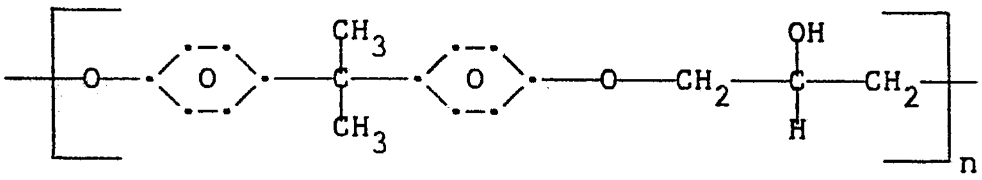

wherein

n is 50 to 200.

This novel composition finds its utility, inter alia, in applications to the electronic and automotive industry where high strength properties and injection molded parts are required.

In addition, the present invention also relates to articles manufactured with the glass fiber-reinforced polyester of improved strength of this invention.

It has been unexpectedly discovered that high strength properties are attainable with a reinforced polyester composition when a particular nucleating agent and a certain amount of a phenoxy resin is added thereto.

The polyesters of the invention are preferably derived from an acid component comprising mainly (preferably at least 90 mol %) terephthalic acid and mainly (preferably at least 90 mol %) a ($C_2$) alkylene glycol or of a ($C_8$) alicyclic diol.

Stated differently, the polyesters of this invention contain repeat units from terephthalic acid and ethylene glycol, or repeat units from terephthalic acid and 1,4-cyclohexanedimethanol, or combinations thereof. Preferably, the polyesters consist essentially of (at least 90 mol %) of such repeat units.

The glycol component may include one or more glycols conventionally used in the production of copolyesters such as aliphatic or alicyclic diols having up to 120 carbon atoms. Examples of such diols include ethylene glycol; diethylene glycol; 2,4-dimethyl-2-ethylhexane-1,3-diol; 2,2,4-trimethyl-1,3-pentanediol; 1,5-pentanediol,1,6-hexanediol; 1,10-decanediol; 2,2,4-trimethyl-1,6-hexanediol; 1,2-cyclohexanedimethanol, 1,3-cyclohexanedimethanol, polytetramethylene glycol, polyoxyethylene glycol, polyoxypropylene glycol, polyoxybutene glycol, poly(oxyethylene-co-oxy propylene glycol) and the like. In a preferred embodiment, the glycol is ethylene glycol or 1,4-cyclohexanedimethanol.

The polyesters useful in this invention can be prepared by processes well known in the art. For example, the polyesters can be prepared by direct condensation or ester interchange. Preferably, the polyesters are prepared by ester interchange.

According to this method, the dicarboxylic acid is reacted with an alcohol to form a diester, such as dimethyl terephthalate, and the diester is ester interchanged with a diol to form a bis ester, such as bis 2-hydroxyethyl terephthalate. The ester interchange product is then polycondensed at low pressure and high temperature to form the polyester. The reaction is allowed to continue until a desired inherent viscosity (I.V.) is attained.

The essential components of the copolyesters, i.e., terephthalalic acid and the glycol component, are materials which are commercially available.

The improved polyester resin composition of this ivention includes a reinforcing filler. The reinforcing filler, in one preferred embodiment, is charged into the polymerization reaction with the monomers. This latter preferred embodiment is employed only in those cases where the polymerization reaction is not affected by the presence of the reinforcing filler.

A preferred reinforcing filler is glass fibers which may be introduced into the composition as chopped glass fibers or continuous glass fiber rovings.

The amount of reinforcing filler ranges between 10 and 60 weight percent of the total composition. More preferably, the amount of reinforcing filler is in the range of between 20 and 55 weight percent of the total composition; and still more preferably 30 weight percent of the composition.

The polyester may also include a second filler such as mica or talc. These fillers may be added in amounts known in the art.

In one embodiment of the invention, the moldable polyester comprises poly(ethylene terephthalate) having an inherent viscosity (I.V.) of 0.4 dl/g to 1.0 dl/g, preferably about 0.6.

In another embodiment of the invention, the polyester is poly(1,4-cyclohexylenedimethylene terephthalate) having an inherent viscosity of 0.6 dl/g to 1.0 dl/g, preferably about 0.77.

The polyester may further include an additive selected from the group consisting of flame retardants, stabilizers, processing aids and colorants.

The phenoxy or poly (hydroxy ether) resins utilized herein are high molecular weight thermoplastic resins which are produced from 2,2-bis (4-hydroxyphenyl) propane and epichlorohydrin according to the procedure described in U.S. Patent No. 3,356,646.

The basic chemical structure of the phenoxy resins is similar to that of epoxy resins. They are however, a separate and unique resin class, differing from epoxies in at least the following important characteristics.

(A) Phenoxy resins are tough and durable thermoplastics. Their average molecular weight ranges from 15,000 to 75,000, preferably from 20,000 to 50,000 compared with 240 to 13,000 for conventional epoxy resins which crosslink on polymerization.

(B) Phenoxy resins do not have terminal, highly reactive epoxy groups and are thermally stable materials with a long shelf life.

(C) Phenoxy resins can be used without further chemical conversion. For their use, no catalysts, curing agents and/or hardeners are required whereas catalysts, curing agents and/or hardeners are required for the use of epoxy resins.

The phenoxy resins utilized herein can be characterized by a repeating structure according to the formula

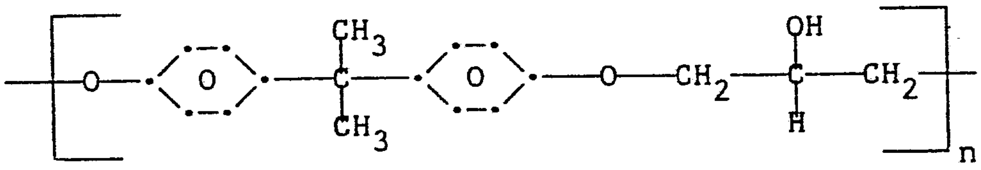

wherein n is 50-200.

The terminal structure is completed with hydrogen atoms or some suitable end capping groups.

The thermoplastic phenoxy resin can be added to the reinforced polyester resin in a number of ways, including the following.

(I) Incorporating the phenoxy resin into the reinforcing agent prior to its intimate blending with the poly(alkylene terephthalate).

(II) Simultaneously and intimately mixing the phenoxy resin with the reinforcing agent and the poly(alkylene terephthalate).

(III) Blending the phenoxy resin with the polymer and then intimately blending with the reinforcing agent. Other mixing techniques can also be used.

A suitable amount of the phenoxy resin is 0.5% to 5.0% by weight of the composition. These unique glass fiber-reinforced polyesters have unexpectedly superior strength and impact strength which make them ideal for use in electronic components and automotive applications.

The phenoxy resin of the invention does not have terminal, highly reactive 1,2-epoxy groups like the polyepoxide resins described in U.S. Patent No. 4,357,268. The 1,2-epoxy groups of the epoxy resins are believed to be responsible for the highly beneficially effects imparted the polyesters by the polyepoxide resins.

The polyesters of this invention have flexural strengths which are 5% to 16% higher than the strength of the same compositions lacking the phenoxy resins.

In general, there should be sufficient nucleating agent to allow the formation of crystals in the molten polyester composition at a high enough temperature upon cooling from the melt to be molded in watercooled molds.

The nucleating agent of the polyester of the invention is selected from the group consisting of an alkali metal salt of an ionic ($C_2$-$C_5$)alpha-olefin/($C_3$-$C_5$) alpha-beta-ethylenically unsaturated carboxylic acid copolymer wherein the carboxylic acid groups are partially neutralized, and mixture thereof.

The ionic hydrocarbon copolymer employed as a component of the blend of this invention is a copolymer of alpha-olefins having the formula $R-CH=CH_2$ , wherein R is a radical selected from the group consisting of hydrogen and ($C_1$-$C_3$) alkyl radicals and alpha-beta-ethylenically unsaturated ($C_3$-$C_5$) carboxylic acids. The alpha-olefin content of the copolymer is at least 90 mole percent, based on the ionic copolymer.

The carboxylic acid groups are randomly distributed over the copolymer molecules and can be 0-100% neutralized by metal cations distributed over the carboxylic acid groups of the copolymer. The metal cations can be derived from the metals selected from the class consisting of Groups I, II, and IV of the periodic table of the elements.

Illustrative of the alpha-olefins useful in the preparation of the ionic copolymer component of the blends of this invention are ethylene, propylene, butene-1 and pentene-1.

Illustrative of alpha-beta-ethylenically unsaturated carboxylic acids useful in the preparation of the ionic copolymer are acrylic acid, methacrylic acid, ethacrylic acid, itaconic acid, maleic acid, fumaric acid, and monoesters of itaconic acid, maleic acid and fumaric acid. Other monomers can, of course, be terpolymerized in the copolymer.

The carboxylic acid groups of the ionic copolymer component of the polymer blends are randomly distributed over the copolymer molecules. One technique by which this random distribution can be achieved may be described as follows.

The copolymerization of the alpha-olefin and the carboxylic acid monomers is conducted in a one-phase system, i.e, in a medium such as benzene or ethylene in which the monomers are soluble.

The medium may be in either liquid or vapor form. Preferably, and especially when relatively small amounts of the carboxylic acid component are desired in the copolymer, the process may be continuous, the monomers being fed into the reactor in the ratio of their relative polymer-forming reactivities, and the residence time in the reactor being limited to prevent all the alkylene monomer feed from being converted into polymer.

The relative proportions of polyethylene terephthalate and ethylene/methacrylic acid in the blends can be varied considerably. The weight of the ethylene/methacrylic acid copolymer present in the blend can be 3% to 10% by weight of the composition.

A preferred composition is that wherein the weight of the ethylene/methacrylic acid copolymer is 3% to 6% by weight of the composition. A most preferred composition is that wherein the ethylene/methacrylic acid

copolymer is 5% by weight of the composition.

In a preferred embodiment of this invention, the ethylene/methacrylic acid copolymer comprises about 85 % to 95 % by weight of ethylene and 5% to 15% by weight methacrylic acid.

The carboxylic acid groups of the ethylene/methacrylic acid copolymer may be unneutralized or neutrlized up to 100% by a cation derived from a metal of Group I, II, or IV of the periodic table of elements. Preferably, the carboxylic acid groups of the ethylene/methacrylic acid copolymer are neutralized to the extent of 50% to 90%.

Preferred cations used in the neutralization of the carboxylic acid groups are $Na^+$, $K^+$, $Ca^{++}$, $Mg^{++}$, $Zn^{++}$ and $Pb^{++}$.

The presence of the nucleating agent enhances the crystallization rate of the polyester composition, and compositions are obtained which can be molded into molds heated at a temperature of 100°C to 120°C.

The polyester of the invention may further comprise 0.01% to 10% by weight of the composition of a plasticizer. Suitable plasticizers are those selected from the group consisting of an ester of an organic acid and an alcohol and mixtures thereof.

The use of a plasticizer in the composition of the present invention is very desirable. Plasticizers which can be used with the composition of the present invention are of the type known in the art which can be used with linear saturated polyester molding compositions, preferably poly(ethylene terephthalate) and poly(cyclohexyldimethylene terephthalate).

A non-limiting but suitable group of plasticizers is found in Dutch Patents NL 79-01605 and NL 79-01609. The plasticizers disclosed are organic esters. These organic esters may be the product of a ($C_7$-$C_{11}$) aromatic carboxylic acid containing at least one carboxyl group per aromatic nucleus, and an alcohol having the formula $(HOCH_2)_xR'$, wherein x is 1, 2 or 3, and R' is a ($C_2$-$C_{15}$) hydrocarbon radical, preferably a ($C_2$-$C_{10}$) hydrocarbon radical.

The alcohol may also have the formula $HO\text{-}(R''O)_yR'''$, wherein y is a 1-8, R'' is a ($C_2$-$C_{15}$) hydrocarbon radical, preferably a ($C_2$-$C_8$) hydrocarbon radical, and R''' is -H or a ($C_2$-$C_{20}$) hydrocarbon radical, preferably a ($C_2$-$C_{12}$) hydrocarbon radical.

The plasticizer disclosed can also be the product of a ($C_1$-$C_{20}$) aliphatic carboxylic acid containing 1 to 3 carboxyl groups, and an alcohol of the formula $HO(R''O)_y R'''$, wherein R'', R''' and y are as defined above.

Preferred organic acids for the above plasticizer are organic acids such as benzoic acid, stearic acid, dimers thereof, terephthalic acid, isophthalic acid, phthalic acid, and dl ($C_7$-$C_{36}$) aliphatic monocarbocylic acids.

Preferred alcohols for the above plasticizers are ($C_2$-$C_{12}$) polyhydric or monohydric alcohols.

A most preferred group of plasticizers are pentaerythritol tetra-stearate and neopentyl glycol dibenzoate. However, other plasticizers which are similar to the above acids of organic esters may also be utilized.

In another embodiment, the reinforced polyester composition of the invention may further comprise an additive selected from the group consisting of flame-retardants, stabilizers, processing aids and colorants, among others. Each additive may be present alone or in combination with one or more the other additives. The additive is present in the composition in an amount of 0.1% to 15% by weight.

The compositions of the invention can be prepared by blending the various components in a blender, e.g., a tumble blender or a henschel mixer, compounding the mixture in an extruder, e.g. , a twin-screw 28 mm Werner-Pfleiderer extruder, and thereafter chopping the extrudate into pellets. The resulting product is suitable for use in injection molding operations. Such operations are standard in the art and need not be described herein.

Despite their superior physical properties, polyesters have not always been the material of choice for injection molding usage because relatively high mold temperatures, e.g., 120°C to 140°C, might be required to ensure good moldability. Attempts to use lower mold temperatures have resulted in the injected material being unmoldable and the article can often only be removed with great difficulty.

However, articles can be manufactured from the reinforced polyester of the invention which have improved strength by methods such as molding, particularly injection molding without the above described drawbacks. However, other methods can also be used and will also result in high-strength, high-impact polyester articles.

In still another preferred embodiment of the invention, articles can be manufactured with a high strength polyester consisting essentially of the composition described supra.

Having now generally described this invention, the same will be better understood by reference to certain specific examples, which are included herein for purposes of illustration only and are not intended to be limiting of the invention or any embodiment thereof, unless so specified.

Example 1

1,950 grams of poly(ethylene terephthalate) (PET) having an I.V.= 0.62 is dried at 150°C in a dehumidifying dryer and mixed with 900 grams of 1/8-inch chopped strand glass fibers (about 30%) (Owens/Corning OC 492AA) and 150 grams of a sodium neutralized ethylene-methacrylic acid copolymer (about 5%) (Surlyn 8527) are extrusion compounded on a single screw extruder at about 265°C and chopped into 1/8-inch (3.2 mm) pellets.

The pellets are redried at 150°C in a dehumidifying dryer and molded into tensile bars at 265°C on an injection molding machine into a mold heated to about 120°C. The tensile strength of this sample is about 22,200 psi (1560 $kg/cm^2$) and the flexural strength about 32,200 psi (2264 $kg/cm^2$).

Example 2

1,935 Grams of PET were dried and mixed with about 30% of glass fibers and about 5% of the sodium neutralized ethylene-methacrylic acid copolymer (Surlyn 8527) as described in Example 1, except that 15 grams (about 0.5%) of polyhydroxy ether (Phenoxy Resin PKHH, Union Carbide) was also compounded into the composition and molded as previously described.

Surprisingly, it is found that the tensile strength of this preparation increases by about 11% (from 22,200 psi [1560 kg/cm$^2$]) to 24,700 psi [2264 kg/cm$^2$]) and the flexural strength by about 15% (from 32,200 psi [2264 kg/cm$^2$] to 37,000 psi [2601 kg/cm$^2$]) when compared with the preparation of Example 1.

Example 3

1,920 Grams of PET are compounded with 900 grams (about 30%) of 1/8-inch (3.2 mm) chopped glass fibers, 150 grams (about 5%) of sodium neutralized ethylene-methacrylic acid copolymer (Surlyn 8527), and 30 grams (about 1%) of polyhydroxy ether (PKHH, Union Carbide) and molded in a manner similar to that of Example 1.

Again, surprisingly it is observed that the tensile strength of this preparation increases by about 15% (from 22,200 psi [1560 kg/cm$^2$] to 25,400 psi [1786 kg/cm$^2$]) and the flexural strength increases by about 16% (from 32,200 to 37,200 psi [2616 kg/cm$^2$]) with respect to the preparation of Example 1.

Example 4

3 Kg of a commercially available 30 wt % glass fiber PET (Rynite 530, Du Pont, Wilmington, DE) are dried and molded under conditions similar to those described in Example 1.

Surprisingly, it is observed that the composition of this invention described in Example 2 exhibits a 9% higher tensile strength (27,000 psi [1898 kg/cm$^2$] vs. 22,600 psi [1589 kg/cm$^2$]) and an 11% higher flexural strength (37,000 psi [2601 kg/cm$^2$] or 33,400 psi [2348 kg/cm$^2$]) than the present composition containing Rynite 530).

Example 5

Another suprising aspect of this invention is that no greater benefits are gained by adding higher concentration levels (greater than 5 wt %) of poly(hydroxy ether) to a reinforced polyester such as a PET/Glass Fiber/Surlyn composition in the composition of the invention.

As an example, 1,780 grams of PET are mixed with 900 grams of chopped strand glass fibers (about 30%), 150 grams of Surlyn 8527 (about 15%), and 150 grams of poly(hydroxy ether) PKHH (about 5%). The composition is compounded, molded and tested in a manner similar to that described in example 1.

In this case, it is observed that the tensile strength increases from 22,200 psi [1561 kg/cm$^2$] to 24,100 psi [1694 kg/cm$^2$] (9% increase). However, this increase in tensile strength obtained for the 5 wt % poly(hydroxy ether) composition is lower than the increase obtained when 3 wt % poly(hydroxy ether) is added to the composition. A 13% increase in tensile strength is obtained (22,200 psi [1561 kg/cm$^2$] to 25,100 psi [1765 kg/cm$^2$]) for the 3 wt % poly(hydroxy ether)-containing composition.

Similar results are obtained for the flexural strength. With a 5 wt % poly(hydroxy ether)-containing composition, the flexural strength only increases about 10% (from 32,200 psi [2264 kg/cm$^2$] to 35,400 psi [2489 kg/cm$^2$]), but as in the case of the tensile strength the flexural strength value for the 5 wt % poly(hydroxy ether)-containing composition is lower than the 15% increase obtained for the 3 wt % poly(hydroxy ether)-containing composition (32,200 psi [2264 kg/cm$^2$] vs. 37,000 psi [2601 kg/cm$^2$]).

No further improvement is attained for compositions containing more than 5 wt % poly (hydroxy ether).

Inherent viscosity (I.V.) is determined in a 60/40 (wt/wt) phenol/tetrachloroethane mixture at 25°C at a concentration of 0.5 g/100 mL.

The invention now being fully described, it will be apparent to one of ordinary skill in the art that many changes and modifications can be made thereto without departing from the spirit or scope of the invention as set forth herein.

**Claims**

1. A reinforced polyester of improved strength characterized by poly(ethylene terephthalate) or poly(1,4-cyclohexylenedimethylene terephthalate) having incorporated therein

about 0.1% to 10.0% by weight of at least one nucleating agent selected from the group consisting of alkali metal salts of ionic $C_2$-$C_5$ alpha-olefins/$C_3$-$C_5$ alpha-beta-ethylenically unsaturated carboxylic acid copolymers, wherein the carboxylic acid groups are partially neutralized;

about 10% to 60% by weight of a reinforcing filler; and

about 0.5% to 5.0% by weight of a phenoxy resin having the formula

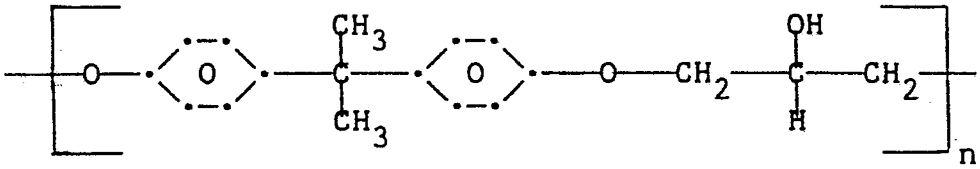

wherein

n is about 50 to 200.

2. The reinforced polyester of improved strength of Claim 1, wherein the reinforcing filler is glass fibers.

3. The reinforced polyester of improved strength of Claim 2, wherein the glass fibers are present in an amount about 20 to 55% by weight.

4. The reinforced polyester of improved strength of Claim 1, further comprising a second filler selected from the group consisting of mica and talc.

5. The reinforced polyester of improved strength of Claim 1, wherein the phenoxy resin is obtained by polymerizing bisphenol A with (chloromethyl)oxirane.

6. The reinforced polyester of improved strength of Claim 1, wherein the phenoxy resin is present in an amount of 0.5 % to 3.0 % by weight.

7. The reinforced polyester of improved strength of Claim 1, further comprising a second additive selected from the group consisting of
flame retardants;
stabilizers;
processing acids; and
colorants.

8. The reinforced polyester of improved strength of Claim 1, wherein the nucleating agent is present in an amount of 0.5 % to 5.0 % by weight.

9. The reinforced polyester of improved strength of Claim 1, further comprising 0.01 to 10 % by weight of a plasticizer.

10. The reinforced polyester of improved strength of Claim 9, wherein the plasticizer is selected from the group consisting of an ester of an organic acid and an alcohol, and mixtures thereof.

11. The reinforced polyester of improved strength of claim 10, wherein the organic acid is selected from the group consisting of benzoic acid, stearic acid, dimers thereof and, terephthalic, isophthalic and phthalic acids and dl ($C_7$-$C_{36}$)aliphatic monocarboxylic acids; and the alcohol is selected from the group consisting of ($C_2$-$C_{12}$)polyhydric and monohydric alcohols.

12. The reinforced polyester of improved strength of Claim 10, wherein the plasticizer is selected from the group consisting of pentaerythritol tetra-stearate and neopentyl glycol dibenzoate.

13. An article manufactured from the reinforced polyester of improved strength of Claim 1.

14. An article manufactured from the reinforced polyester of improved strength of Claim 24 by molding.

15. A reinforced polyester of improved strength comprising a moldable polyester having repeat units from a dicarboxylic acid component comprising terephthalic acid and repeat units from a glycol component comprising ethylene glycol, 1,4-cyclohexanedimethanol or a blend thereof, said polyester having incorporated therein

about 0.1% to 10.0% by weight of at least one nucleating agent comprising a compound selected from the group consisting of alkali metal salts of ionic $C_2$-$C_5$ alpha-olefins/$C_3$-$C_5$alpha-beta-ethylenically unsaturated carboxylic acid copolymers, wherein the carboxylic acid groups are partially neutralized;

about 0.5% to 5.0% by weight of a phenoxy resin having the formula

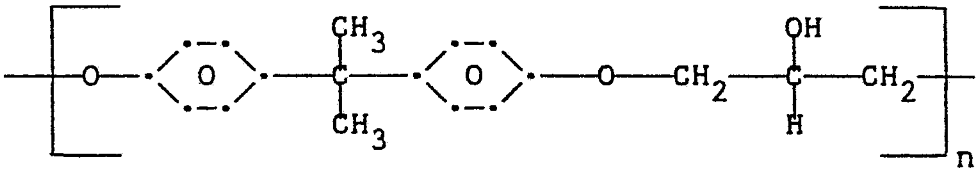

wherein

n is about 50 to 200.

16. The reinforced polyester of Claim 30 wherein said dicarboxylic acid consists essentially of terephthalic acid and said glycol component consists essentially of ethylene glycol, 1,4-cyclohexanedimethanol or a blend thereof.